# EUROPEAN PATENT APPLICATION

(11) **EP 3 569 658 A1**
(43) Date of publication of application: **20.11.2019**
(21) Application number: 17891700.1
(22) Date of filing: 10.01.2017
(51) Int. Cl.: C08L 101/00, C08K 5/00, C08L 77/00, F16C 33/12, F16H 55/06

(54) **MOLDED CROSSLINKED-RESIN OBJECT, SLIDING MEMBER, GEAR, AND BEARING**

(71) Applicant: Sumitomo Electric Fine Polymer, Inc., Sennan-gun, Osaka 590-0458 (JP); Sumitomo Electric Industries, Ltd., Osaka-shi, Osaka 541-0041 (JP)
(72) Inventor: OKABE Shohei, Osaka 590-0458 (JP); YAMASAKI Satoshi, Osaka-shi Osaka 554-0024 (JP)
(74) Representative: Boult Wade Tennant LLP
(86) International application number: PCT/JP2017/000466
(87) International publication number: WO 2018/131069

(57) **Abstract**

A crosslinked resin molded body according to an embodiment of the present invention is a crosslinked resin molded body molded from a resin composition containing a crosslinking aid. The crosslinked resin molded body contains part of the crosslinking aid that is not used for crosslinking.

## Description

### Technical Field

The present invention relates to a crosslinked resin molded body, a sliding member, a gear, and a bearing.

### Background Art

Polyamides are widely used for various parts in the industrial machinery field because they have, for example, good strength, frictional wear resistance, and chemical resistance. In addition, the above properties can be further enhanced by crosslinking polyamides (refer to Japanese Unexamined Patent Application Publication No. 2015-209512). Crosslinked resin molded bodies produced by using such polyamides are widely used as, for example, automobile parts, machine parts, and electrical and electronic components.

In recent years, regarding sliding members for which particularly high mechanical strength is required, for example, gears, cams, and bearings, metal parts have been replaced with resin molded bodies from the viewpoint reducing the weight. Therefore, higher mechanical strength has been required for crosslinked resin molded bodies containing a polyamide as a main component.

### Citation List

### Patent Literature

PTL 1: Japanese Unexamined Patent Application Publication No. 2015-209512

### Summary of Invention

A crosslinked resin molded body according to the present disclosure is a crosslinked resin molded body molded from a resin composition containing a crosslinking aid. The crosslinked resin molded body contains a polyamide as a main component and further contains part of the crosslinking aid that is not used for crosslinking.

### Brief Description of Drawings

[Fig. 1] Figure 1 is a chromatogram (first chromatogram) of Prototype Example 1.
[Fig. 2] Figure 2 is a chromatogram (first chromatogram) of Prototype Example 4.
[Fig. 3] Figure 3 is a chromatogram (second chromatogram) of a crosslinking aid.
[Fig. 4] Figure 4 is a chart showing a peak extracted from the chromatogram of Fig. 1.

### Description of Embodiments

### [Problem to be Solved by Present Disclosure]

The present invention has been made on the basis of the circumstances described above. An object of the present invention is to provides a crosslinked resin molded body, a sliding member, a gear, and a bearing that have good mechanical strength.

### [Advantageous Effects of Present Disclosure]

The present disclosure can provide a crosslinked resin molded body, a sliding member, a gear, and a bearing that have good mechanical strength.

### [Description of Embodiments of Present Invention]

A crosslinked resin molded body according to an embodiment of the present invention is a crosslinked resin molded body molded from a resin composition containing a crosslinking aid, in which the crosslinked resin molded body contains part of the crosslinking aid that is not used for crosslinking.

Presumably, since the crosslinked resin molded body contains a crosslinking aid that is not used for crosslinking, the crosslinking aid released from a polymer improves a sliding property, and the crosslinked resin molded body has good mechanical strength, in particular, wear resistance.

The crosslinking aid is preferably triallyl cyanurate or trimethylolpropane triacrylate. When the crosslinking aid is triallyl cyanurate or trimethylolpropane triacrylate, the effect of improving mechanical strength is noticeable.

The crosslinked resin molded body preferably contains a polyamide as a main component. When a polyamide is contained as a main component, the crosslinked resin molded body has, for example, better strength, frictional wear resistance, and chemical resistance.

The polyamide is preferably polyamide 66. When the polyamide is polyamide 66, strength and frictional wear resistance of the crosslinked resin molded body further improve.

A first chromatogram obtained by gas chromatographic analysis of a gas generated when the crosslinked resin molded body is heated at 600°C for 12 seconds preferably has a peak having the same retention time as a peak of a second chromatogram obtained by gas chromatographic analysis of the crosslinking aid under the same conditions. Presumably, when a gas generated by heating the crosslinked resin molded body at 600°C for 12 seconds contains a crosslinking aid, the effect of improving a sliding property, the effect being achieved by the released crosslinking aid, is more reliably obtained.

The crosslinked resin molded body is preferably crosslinked by irradiation with ionizing radiation. When the crosslinked resin molded body is crosslinked by irradiation with ionizing radiation, mechanical strength of the crosslinked resin molded body further improves.

An irradiation dose of the ionizing radiation is preferably 1 kGy or more and 1,000 kGy or less. When the irradiation dose of the ionizing radiation is within the above range, degradation of the resin due to the irradiation can be suppressed while achieving a sufficient crosslinking density.

A sliding member according to another embodiment of the present invention is a sliding member formed of the crosslinked resin molded body. Since the sliding member formed of the crosslinked resin molded body has good mechanical strength, the sliding member has relatively good durability.

A gear according to still another embodiment of the present invention is a gear formed of the crosslinked resin molded body. Since the gear formed of the crosslinked resin molded body has good mechanical strength, the gear has relatively good durability.

A bearing according to still another embodiment of the present invention is a bearing formed of the crosslinked resin molded body. Since the bearing formed of the crosslinked resin molded body has good mechanical strength, the bearing has relatively good durability.

Herein, the tem "main component" refers to a component that has a highest mass content.

### [Details of Embodiments of Present Invention]

Hereinafter, embodiments of the present invention will be described.

### [Crosslinked Resin Molded Body]

The crosslinked resin molded body is molded from a resin composition containing a crosslinking aid and contains part of the crosslinking aid that is not used for crosslinking. The crosslinked resin molded body may contain a filler in the resin composition. Presumably, since the crosslinked resin molded body contains a crosslinking aid that is not used for crosslinking and that is released from a resin serving as a base, mechanical strength, in particular, wear resistance or a sliding property is improved.

The crosslinked resin molded body can be used as a sliding member such as a gear wheel, a cam, or a bearing which is rubbed with another object. That is, the shape of the crosslinked resin molded body is not particularly limited, and the crosslinked resin molded body may have a shape necessary for any member, such as the sliding member described above. Furthermore, a gear, a bearing, and other sliding members each formed of the crosslinked resin molded body molded as described above are all interpreted as embodiments of the present invention.

The sliding member formed of the crosslinked resin molded body has low friction and tends not to wear. In the gear formed of the crosslinked resin molded body, an increase in backlash due to wear is suppressed. Since the bearing formed of the crosslinked resin molded body tends not to wear, a decrease in accuracy with time is suppressed.

### <Resin>

Examples of the resin serving as a main component of the resin composition include polyamides, polyesters, and polyketones. In particular, when the resin composition contains a polyamide as a main component, the crosslinked resin molded body has good mechanical properties, frictional wear resistance, and chemical resistance.

The resin composition may contain resins different from the main component. The resins different from the main component may be used alone or in combination of two or more thereof. However, the resin composition preferably contains a polyamide alone as a resin component.

The lower limit of a content of a polyamide in the resin composition containing the polyamide as a main component is preferably 70% by mass and more preferably 80% by mass. When the content of the polyamide in the resin composition is less than the lower limit, mechanical properties, frictional wear resistance, and chemical resistance of the crosslinked resin molded body may become insufficient.

Examples of the polyamides include polyamide 6, polyamide 66, polyamide 46, polyamide 11, polyamide 12, polyamide 610, polyamide 612, polyamide 66/61, polyamide 66/6T, polyamide 6T/66, polyamide 6T/6I, polyamide 6T/6I/66, polyamide 6T/11, polyamide 6T-5MT, polyamide 6T/6, polyamide MXD-6, polyamide 9T, and wholly aromatic polyamides. Of these, polyamides are preferred, in particular, from the viewpoint of modulus of elasticity and mechanical strength. Among polyamides, polyamide 66 is more preferred.

Examples of the polyesters include polybutylene terephthalate, polybutylene naphthalate, polyethylene terephthalate, polyethylene naphthalate, polytrimethylene terephthalate, and polytrimethylene naphthalate. Of these, polybutylene terephthalate is preferred, in particular, from the viewpoint of modulus of elasticity and mechanical strength.

Examples of the polyketones include ketone-ethylene copolymers and ketone-ethylene-propylene terpolymers.

Examples of the resins other than the polyamides, the polyesters, and the polyketones include polyolefins, polyurethanes, acrylic resins, methacrylic resins, epoxy resins, fluororesins, natural or synthetic rubbers, silicones, ABS (styrene-acrylonitrile-butadiene copolymer) resins, polycarbonates, polylactic acids, and polyacetals.

When the resin composition contains, as a resin component, a polyamide and a resin other than the polyamide, the upper limit of a ratio of the resin other than the polyamide in a total amount of the resin component of the resin composition is preferably 20% by mass, more preferably 10% by mass, and still more preferably 5% by mass. When the ratio of the resin other than the polyamide exceeds the upper limit, mechanical properties, frictional wear resistance, and chemical resistance of the crosslinked resin molded body may become insufficient.

### <Crosslinking Aid>

Examples of the crosslinking aid include allyl compounds, acrylate or methacrylate compounds, oxime compounds, vinyl compounds, and maleimide compounds. The crosslinking aids may be used alone or in combination of two or more thereof.

Examples of the allyl compounds include hexamethylene diallyl nadiimide, diallyl itaconate, diallyl phthalate, diallyl isophthalate, diallyl monoglycidyl isocyanurate, triallyl cyanurate, and triallyl isocyanurate. Of these, triallyl isocyanurate is more preferred.

Examples of the acrylate or methacrylate compounds include diethylene glycol diacrylate, diethylene glycol dimethacrylate, polyethylene glycol diacrylate, polyethylene glycol dimethacrylate, trimethylolpropane triacrylate, trimethylolpropane trimethacrylate, ethoxylated bisphenol A diacrylate, ethoxylated bisphenol A dimethacrylate, an acrylic acid/zinc oxide mixture, allyl acrylate, allyl methacrylate, trimethacryl isocyanurate, and pentaerythritol triacrylate. Of these, trimethylolpropane triacrylate is more preferred.

Examples of the oxime compounds include p-quinone dioxime and p,p'-dibenzoyl quinone dioxime.

An example of the vinyl compound is divinylbenzene.

Examples of the maleimide compounds include N,N'-m-phenylene bismaleimide and N,N'-(4,4'-methylenediphenylene)dimaleimide.

The crosslinking aids are preferably allyl compounds and acrylate compounds, and particularly preferably triallyl isocyanurate and trimethylolpropane triacrylate because the crosslinking density of the crosslinked resin molded body can be further increased.

The crosslinked resin molded body is preferably one in which a crosslinking aid that is not used for crosslinking is volatilized when the network of polymer chains is loosened by heating. It is considered that since the released crosslinking aid has a high degree of freedom in this manner, the sliding property and the like of the crosslinked resin molded body can be improved.

An example of the method for loosening the network of polymer chains by heating is a method in which the crosslinked resin molded body is heated at a high temperature for a short time. In this case, the heating temperature (furnace temperature) is preferably equal to or higher than a thermal decomposition temperature of the resin which is a main component, and the heating time is preferably such a short time that most of the resin which is the main component does not thermally decompose. In a specific example, the crosslinking aid that is not used for crosslinking can be volatilized by heating the crosslinked resin molded body at 600°C for 12 seconds.

That is, a first chromatogram obtained by gas chromatographic analysis of a gas generated when the crosslinked resin molded body is heated at 600°C for 12 seconds preferably has a peak having the same retention time as a peak of a second chromatogram obtained by gas chromatographic analysis of the crosslinking aid under the same conditions.

The crosslinked resin molded body is preferably a molded body crosslinked by irradiation with ionizing radiation. Specifically, it is considered that when the crosslinked resin molded body is obtained while crosslinking of the resin with the crosslinking aid is accelerated by irradiation with ionizing radiation, the crosslinking density can be improved and the strength of the crosslinked resin molded body can be further improved.

### <Filler>

The filler contained in the crosslinked resin molded body is preferably an inorganic filler. The incorporation of the inorganic filler in the resin composition of the crosslinked resin molded body enables mechanical strength of the crosslinked resin molded body to be further improved. From this point of view, a needle-like filler is preferably used as the inorganic filler.

The lower limit of an average aspect ratio of the needle-like filler is preferably 2, more preferably 10, and still more preferably 20. On the other hand, the upper limit of the average aspect ratio of the needle-like filler is preferably 100, more preferably 90, and still more preferably 80. When the average aspect ratio of the needle-like filler is less than the lower limit, the effect of improving mechanical strength may become insufficient. On the other hand, when the average aspect ratio of the needle-like filler exceeds the upper limit, the inorganic filler may be easily damaged when the inorganic filler is mixed in the resin composition.

The lower limit of an average diameter (average minor axis) of the needle-like filler is preferably 0.1 µm and more preferably 0.3 µm. On the other hand, the upper limit of the average diameter of the needle-like filler is preferably 1 µm and more preferably 0.6 µm. The lower limit of an average length (average major axis) of the needle-like filler is preferably 5 µm and more preferably 10 µm. On the other hand, the upper limit of the average length of the needle-like filler is preferably 40 µm and more preferably 20 µm.

The main component of the inorganic filler preferably includes wollastonite and titanic acid compounds that can improve mechanical strength while enhancing wear resistance of the crosslinked resin molded body. Examples of the titanic acid compounds include potassium titanate and aluminum titanate.

The lower limit of a content of the inorganic filler in the resin composition is preferably 10 parts by mass, more preferably 20 parts by mass, and still more preferably 30 parts by mass relative to 100 parts by mass of the resin component. On the other hand, the upper limit of the content is preferably 60 parts by mass, more preferably 55 parts by mass, and still more preferably 50 parts by mass relative to 100 parts by mass of the resin component. When the content is less than the lower limit, mechanical strength of the crosslinked resin molded body may not be sufficiently increased. On the other hand, when the content exceeds the upper limit, moldability of the resin composition may decrease.

Furthermore, the crosslinked resin molded body can contain a sliding agent in the resin composition. Since the incorporation of the sliding agent in the resin composition enables the coefficient of kinetic friction of the crosslinked resin molded body to be decreased, the effect of suppressing physical deterioration during sliding can be further enhanced.

Examples of the sliding agent include polyolefins such as polyethylene, e.g., ultrahigh-molecular-weight polyethylene, and polypropylene; fluororesins such as polytetrafluoroethylene, polytetrafluoroethylene/perfluoroalkoxyethylene copolymers, and polytetrafluoroethylene/polyhexafluoropropylene; silicones such as polydimethylsiloxane, polymethylphenylsiloxane, amino-modified polydimethylsiloxane, epoxy-modified polydimethylsiloxane, alcohol-modified polydimethylsiloxane, carboxy-modified polydimethylsiloxane, and fluorine-modified polydimethylsiloxane; layered inorganic compounds such as graphite; inorganic fibers such as glass fibers, potassium titanate whiskers, zinc oxide whiskers, and boronic acid whiskers; organic fibers such as LCP fibers, aramid fibers, and carbon fibers; inorganic particles such as alumina, silica, and talc; phosphates such as metaphosphates, pyrophosphates, calcium hydrogen phosphate, potassium hydrogen phosphate, barium phosphate, lithium phosphate, calcium metaphosphate, and zinc pyrophosphate; mineral oil such as spindle oil, turbine oil, machine oil, and dynamo oil; montanic acid salts such as calcium montanate; and molybdenum dioxide. The sliding agents may be used alone or in combination of two or more thereof.

Of these, the sliding agent is preferably a polyolefin and more preferably polyethylene from the viewpoint that wear resistance of the crosslinked resin molded body can be further enhanced.

The lower limit of a content of the sliding agent in the resin composition is preferably 1 part by mass, more preferably 1.5 parts by mass, and still more preferably 2 parts by mass relative to 100 parts by mass of the resin component. On the other hand, the upper limit of the content is preferably 10 parts by mass, 9.5 parts by mass, and still more preferably 9 parts by mass relative to 100 parts by mass of the resin component. When the content is less than the lower limit, wear resistance of the crosslinked resin molded body cannot be sufficiently increased, and the effect of suppressing physical deterioration during sliding may become insufficient. When the content exceeds the upper limit, moldability of the resin composition may decrease.

The resin composition may optionally contain additives. Examples of the additives include polymerization inhibitors, filling agents, plasticizers, pigments, stabilizers, lubricants, softening agents, sensitizing agents, antioxidants, flame retardants, mold release agents, weathering agents, antistatic agents, and silane coupling agents. The additives may be used alone or in combination of two or more thereof.

The resin composition can be obtained by mixing the components. Specifically, the resin composition can be obtained by mixing, for example, a polyamide and the crosslinking aid described above. A mixer such as a single-screw mixer or a twin-screw mixer can be used in the mixing. Heating may be performed during the mixing.

### <Method for Producing Crosslinked Resin Molded Body>

The crosslinked resin molded body can be produced by a method including an injection molding step of injection-molding a resin composition containing a crosslinking aid. The crosslinked resin molded body is preferably produced by a method further including an ionizing radiation irradiation step of irradiating a molded body obtained in the injection molding step with ionizing radiation.

### (Injection Molding Step)

In the injection molding step, the resin composition described above is injection-molded to obtain the crosslinked resin molded body having a desired shape. For some types of resins and crosslinking aids, crosslinking reaction can be allowed to proceed in this injection molding step. Alternatively, a resin in the resin composition may be crosslinked by, for example, using a radical generator that generates a radical by heating to activate a crosslinking aid, and heating a metal mold into which the resin composition has been injected in the injection molding step.

The lower limit of a temperature of the resin composition in the injection molding step is preferably 200°C and more preferably 250°C. On the other hand, the upper limit of the temperature is preferably 350°C and more preferably 320°C. When the temperature is lower than the lower limit, the resin composition may have insufficient fluidity, and a sufficient injection molding speed may not be achieved. When the temperature exceeds the upper limit, the resin may be thermally decomposed.

The lower limit of an injection pressure in the injection molding step is preferably 70 kg/cm² and more preferably 80 kg/cm². On the other hand, the upper limit of the injection pressure is preferably 130 kg/cm² and more preferably 120 kg/cm². When the injection pressure is lower than the lower limit, a short shot may occur, and the crosslinked resin molded body having a desired shape or size may not be obtained. When the injection pressure exceeds the upper limit, burrs may be formed on the periphery of the crosslinked resin molded body, or a decrease in productivity may be caused.

The lower limit of a metal mold temperature in the injection molding step is preferably 40°C and more preferably 50°C. On the other hand, the upper limit of the metal mold temperature is preferably 120°C and more preferably 100°C. When the metal mold temperature is lower than the lower limit, crystallization may be caused by rapid cooling, which may adversely affect surface smoothness and dimensional accuracy of the crosslinked resin molded body. When the metal mold temperature exceeds the upper limit, burrs may be formed on the periphery of the crosslinked resin molded body, or dimensional accuracy may be adversely affected.

### (Ionizing Radiation Irradiation Step)

In the ionizing radiation irradiation step, the crosslinked resin molded body obtained in the injection molding step is irradiated with ionizing radiation to accelerate crosslinking of the resin in the crosslinked resin molded body.

Examples of the ionizing radiation include α-rays, β-lays, γ-rays, electron beams, and X-rays. Of these, an electron beam is preferred as the ionizing radiation from the viewpoint of, for example, the ease of control and the safety.

The irradiation dose of the ionizing radiation is not particularly limited. The irradiation dose is preferably 1 kGy or more and 1,000 kGy or less from the viewpoint of suppressing degradation of the resin due to the irradiation while achieving a sufficient crosslinking density.

For example, when an electron beam is applied as the ionizing radiation, the lower limit of the irradiation dose is preferably 5 kGy and more preferably 10 kGy. On the other hand, the upper limit of the irradiation dose is preferably 960 kGy and more preferably 480 kGy. When the irradiation dose of the electron beam is less than the lower limit, a sufficient crosslinking density may not be achieved in the molded body after the electron-beam irradiation. When the irradiation dose exceeds the upper limit, decomposition or degradation of the molded body may be caused by the electron-beam irradiation.

The irradiation with ionizing radiation can be performed at room temperature. The irradiation with ionizing radiation is preferably performed in a low-oxygen or oxygen-free atmosphere.

### [Other Embodiments]

It is to be understood that the embodiments disclosed herein are only illustrative and non-restrictive in all respects. The scope of the present invention is not limited to the configurations of the embodiments and is defined by the claims described below. The scope of the present invention is intended to cover all the modifications within the meaning and the scope of equivalents of the claims.

In the production of the crosslinked resin molded body, the resin composition may be molded into a desired shape by a molding method other than the injection molding method, for example, an extrusion molding method, a press molding method, a blow molding method, or a vacuum molding method.

In the production of the crosslinked resin molded body, the resin composition may be crosslinked by a chemical crosslinking method.

Furthermore, a metal part such as a shaft may be incorporated in the crosslinked resin molded body.

### EXAMPLES

Hereinafter, the present invention will be more specifically described by way of examples. The present invention is not limited to the following examples.

### <Prototype Example 1>

First, 100 parts by mass of a resin and 1 part by mass of a crosslinking aid were mixed to prepare a resin composition. The resin used was "LEONA 1402S" (polyamide 66) available from Asahi Kasei Corporation. The crosslinking aid used was "TAICROS" (triallyl isocyanurate: TAIC) available from Evonik Degussa Corporation.

Next, the resin composition was fed into a twin-screw mixer and melt-mixed at 240°C. After melt-mixing, the resin composition was ejected from the twin-screw mixer, the ejected product was cooled with water and finely cut to obtain a pellet-like resin composition. Next, the pellet-like resin composition was fed into an injection molding machine and injection-molded by the injection molding machine to obtain a sheet-like molded body having a size of 40 mm × 40 mm × 2 mm. The injection molding was performed under the conditions of an injection temperature of 280°C, a metal mold temperature of 80°C, an injection pressure of 100 kg/cm², and a holding pressure time of 10 seconds.

Next, the sheet-like molded body was irradiated with an electron beam such that the irradiation dose was 150 kGy. Thus, a test piece of Prototype Example 1 was obtained.

### <Prototype Example 2>

A test piece of Prototype Example 2 was obtained as in Prototype Example 1 except that the irradiation dose of the electron beam was 1,000 kGy.

### <Prototype Example 3>

A test piece of Prototype Example 3 was obtained as in Prototype Example 1 except that the blending amount of the crosslinking aid of an electron beam was 5 parts by mass.

### <Prototype Example 4>

A test piece of Prototype Example 4 was obtained as in Prototype Example 1 except that the blending amount of the crosslinking aid of an electron beam was 10 parts by mass.

### <Prototype Example 5>

A test piece of Prototype Example 5 was obtained as in Prototype Example 1 except that the blending amount of the crosslinking aid of an electron beam was 10 parts by mass, and the irradiation dose of the electron beam was 5 kGy.

### <Prototype Example 6>

A test piece of Prototype Example 6 was obtained as in Prototype Example 1 except that "A-TMPT" (trimethylolpropane triacrylate: TMPT) available from Shin-Nakamura Chemical Co., Ltd. was used as the crosslinking aid.

### <Prototype Example 7>

A test piece of Prototype Example 7 was obtained as in Prototype Example 6 except that the amount of the crosslinking aid blended was 5 parts by mass.

### <Prototype Example 8>

A test piece of Prototype Example 8 was obtained as in Prototype Example 6 except that the amount of the crosslinking aid blended was 10 parts by mass.

### <Prototype Example 9>

A test piece of Prototype Example 9 was obtained as in Prototype Example 3 except that "STANYL TW341-N" (polyamide 46) available from DSM Engineering Plastics was used as the resin.

### <Prototype Example 10>

A test piece of Prototype Example 10 was obtained as in Prototype Example 3 except that "AMILAN CM1007" (polyamide 6) available from Toray Industries, Inc. was used as the resin.

### <Prototype Example 11>

A test piece of Prototype Example 11 was obtained as in Prototype Example 3 except that "GENESTAR N1000A" (polyamide 9T) available from Kuraray Co., Ltd. was used as the resin.

### <Prototype Example 12>

A test piece of Prototype Example 12 was obtained as in Prototype Example 3 except that "VYLOAMIDE MJ300" (polyamide 6T/11) available from Toyobo Co., Ltd. was used as the resin.

### <Prototype Example 13>

A test piece of Prototype Example 13 was obtained as in Prototype Example 3 except that "DURANEX 800F" (polybutylene terephthalate: PBT) available from Polyplastics Co., Ltd. was used as the resin.

### <Prototype Example 14>

A test piece of Prototype Example 14 was obtained as in Prototype Example 3 except that "M330" (polyketone) available from Hyosung was used as the resin.

### <Prototype Example 15>

A test piece of Prototype Example 15 was obtained as in Prototype Example 3 except that the amount of the resin blended was 70 parts by mass, and a glass filler was added in an amount of 30 parts by mass. The glass filler used was "ECS03T" available from Nippon Electric Glass Co., Ltd.

### <Prototype Example 16>

A test piece of Prototype Example 16 was obtained as in Prototype Example 3 except that the irradiation dose of the electron beam was 1,200 kGy.

### <Prototype Example 17>

A test piece of Prototype Example 17 was obtained as in Prototype Example 4 except that the irradiation dose of the electron beam was 1,200 kGy.

### <Prototype Example 18>

A test piece of Prototype Example 18 was obtained as in Prototype Example 3 except that no crosslinking aid was blended, and irradiation with an electron beam was not performed.

### <Prototype Example 19>

A test piece of Prototype Example 19 was obtained as in Prototype Example 3 except that the amount of the crosslinking aid blended was 0.1 parts by mass.

### <Prototype Example 20>

A test piece of Prototype Example 20 was obtained as in Prototype Example 1 except that the irradiation dose of the electron beam was 1,200 kGy.

### <Prototype Example 21>

A test piece of Prototype Example 21 was obtained as in Prototype Example 3 except that 1 part by mass of a radical generator was blended, and heating was performed at 200°C for one hour after molding to generate a radical, thereby activating the crosslinking aid and crosslinking the resin without irradiation with an electron beam. The radical generator used was "NOFMER BC90" (2,3-dimethyl-2,3-diphenylbutane: DMDFB) available from NOF Corporation.

Tables 1 and 2 summarize the compositions and the irradiation doses of the electron beam of Prototype Examples 1 to 21 described above.

### <Gas Chromatographic Analysis>

A gas generated by heating each of the test pieces of Prototype Examples at 600°C for 12 seconds was analyzed by gas chromatography to obtain a first chromatogram.
Each of the crosslinking aids was analyzed alone by gas chromatography under the same conditions to obtain a second chromatogram. A peak retention time of the crosslinking aid was specified by the second chromatogram. A peak having the same retention time as the peak of the crosslinking aid was extracted from the first chromatogram of each of the test pieces. Thus, whether or not a peak having the same retention time as the peak of the crosslinking aid in the second chromatogram was present in the first chromatogram of each of the test pieces was determined.

A gas chromatograph "5977MSD" available from Agilent Technologies, Inc. was used.

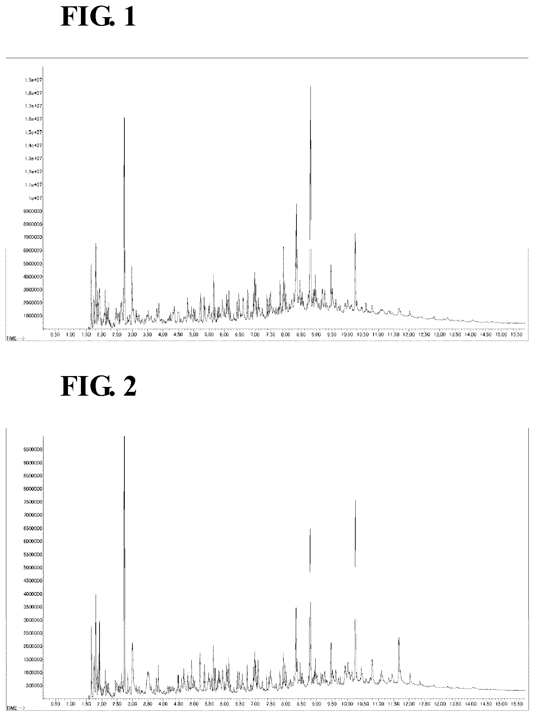

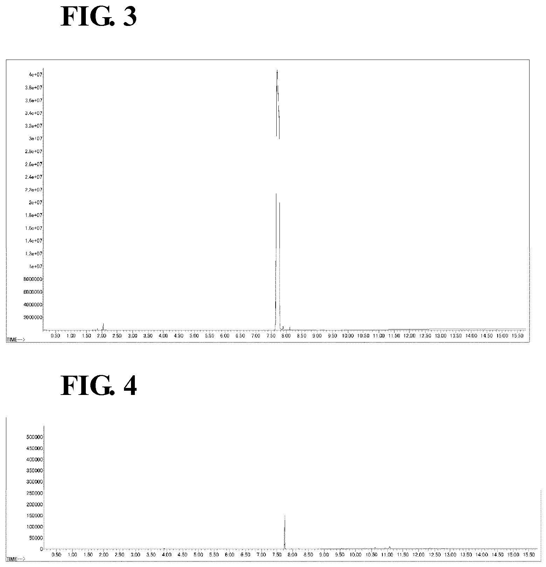

Figures 1, 2, and 3 are chromatograms obtained by gas chromatographic analysis of Prototype Example 1, Prototype Example 18, and the crosslinking aid, respectively, using the method described above. The retention time of the peak of the crosslinking aid in the chromatogram in Fig. 3 was 7.737 minutes. Regarding this retention time, that is, the peak at 7.737 minutes, a molecular weight derived by mass spectral analysis corresponded to the molecular weight of triallyl isocyanurate.

Next, Fig. 4 is a chart showing a peak (a portion projecting from a baseline) near a retention time of 7.737 minutes, the peak being extracted from each of the chromatograms of Figs. 1 and 2. When a peak is present near a retention time of 7.737 minutes as in Fig. 4, it is determined that a crosslinking aid that is not used for crosslinking is contained. When no peak is present near a retention time of 7.737 minutes, it is determined that a crosslinking aid that is not used for crosslinking is not contained. Tables 1 and 2 further show the presence or absence of the crosslinking aid that is not used for crosslinking, determined as described above.

### <Amount of Wear>

With regard to Prototype Examples described above, an amount of wear due to a wear test was measured as an indicator of mechanical strength. Specifically, a pin-on-disk wear test was performed in which three iron pins each of which had a diameter of 4.7 mm and which were arranged on one circumference having a center serving as a rotational axis were slid on a surface of each of the test pieces of Prototype Examples in an atmosphere at 25°C at a load of 4 MPa and at a rate of 30 m/min for 30 minutes, and the amount [mg] of wear was measured. The tip of each of the pins had a flat surface. Tables 1 and 2 further show this amount of wear.

**[Table 1]**

| Prototype number | 1 | 2 | 3 | 4 | 5 | 6 | 7 | 8 | 9 | 10 | 11 |
|---|---|---|---|---|---|---|---|---|---|---|---|
| Polyamide 66 | 100 | 100 | 100 | 100 | 100 | 100 | 100 | 100 | - | - | - |
| Polyamide 46 | - | - | - | - | - | - | - | - | 100 | - | - |
| Polyamide 6 | - | - | - | - | - | - | - | - | - | 100 | - |
| Polyamide 9T | - | - | - | - | - | - | - | - | - | - | 100 |
| Polyamide 6T/1 | - | - | - | - | - | - | - | - | - | - | - |
| P B T | - | - | - | - | - | - | - | - | - | - | - |
| Polyketone | - | - | - | - | - | - | - | - | - | - | - |
| Glass filler | - | - | - | - | - | - | - | - | - | - | - |
| T A I C | 1 | 1 | 5 | 10 | 10 | - | - | - | 5 | 5 | 5 |
| T M P T | - | - | - | - | - | 1 | 5 | 10 | - | - | - |
| D M D F B | - | - | - | - | - | - | - | - | - | - | - |
| Irradiation dose [kGy] | 150 | 1000 | 150 | 150 | 5 | 150 | 150 | 150 | 150 | 150 | 150 |
| Detection of crosslinking aid | Present | Present | Present | Present | Present | Present | Present | Present | Present | Present | Present |
| Amount of wear [mg] | 48 | 62 | 46 | 45 | 42 | 52 | 49 | 48 | 42 | 79 | 41 |

**[Table 2]**

| Prototype number | 12 | 13 | 14 | 15 | 16 | 17 | 18 | 19 | 20 | 21 |
|---|---|---|---|---|---|---|---|---|---|---|
| Polyamide 66 | - | - | - | 70 | 100 | 100 | 100 | 100 | 100 | 100 |
| Polyamide 46 | - | - | - | - | - | - | - | - | - | - |
| Polyamide 6 | - | - | - | - | - | - | - | - | - | - |
| Polyamide 9T | - | - | - | - | - | - | - | - | - | - |
| Polyamide 6T/11 | 100 | - | - | - | - | - | - | - | - | - |
| P B T | - | 100 | - | - | - | - | - | - | - | - |
| Polyketone | - | - | 100 | - | - | - | - | - | - | - |
| Glass filler | - | - | - | 30 | - | - | - | - | - | - |
| T A I C | 5 | 5 | 5 | 5 | 5 | 10 | - | 0. 1 | 1 | 5 |
| T M P T | - | - | - | - | - | - | - | - | - | - |
| D M D F B | - | - | - | - | - | - | - | - | - | 1 |
| Irradiation dose [kGy] | 150 | 150 | 150 | 150 | 1200 | 1200 | - | 150 | 1200 | - |
| Detection of crosslinking aid | Present | Present | Present | Present | Present | Present | Absent | Absent | Absent | Absent |
| Amount of wear [mg] | 53 | 52 | 48 | 38 | 100 | 100 | 155 | 148 | 182 | 172 |

As shown in Tables 1 and 2, Prototype Examples 1 to 17, which contained a crosslinking aid that was not used for crosslinking, each had a relatively small amount of wear. In contrast, Prototype Examples 18 to 21, which did not contain a crosslinking aid that was not used for crosslinking, each had a relatively large amount of wear.

## Claims

1. A crosslinked resin molded body molded from a resin composition containing a crosslinking aid,
wherein the crosslinked resin molded body contains part of the crosslinking aid that is not used for crosslinking.

2. The crosslinked resin molded body according to Claim 1, wherein the crosslinking aid is triallyl cyanurate or trimethylolpropane triacrylate.

3. The crosslinked resin molded body according to Claim 1 or 2, wherein the crosslinked resin molded body contains a polyamide as a main component.

4. The crosslinked resin molded body according to Claim 3, wherein the polyamide is polyamide 66.

5. The crosslinked resin molded body according to any one of Claims 1 to 4, wherein a first chromatogram obtained by gas chromatographic analysis of a gas generated when the crosslinked resin molded body is heated at 600°C for 12 seconds has a peak having the same retention time as a peak of a second chromatogram obtained by gas chromatographic analysis of the crosslinking aid under the same conditions.

6. The crosslinked resin molded body according to any one of Claims 1 to 5, wherein the crosslinked resin molded body is crosslinked by irradiation with ionizing radiation.

7. The crosslinked resin molded body according to Claim 6, wherein an irradiation dose of the ionizing radiation is 1 kGy or more and 1,000 kGy or less.

8. A sliding member comprising the crosslinked resin molded body according to any one of Claims 1 to 7.

9. A gear comprising the crosslinked resin molded body according to any one of Claims 1 to 7.

10. A bearing comprising the crosslinked resin molded body according to any one of Claims 1 to 7.
